# EUROPÄISCHE PATENTSCHRIFT

(11) **EP 1 979 732 B1**
(45) Veröffentlichungstag und Bekanntmachung des Hinweises auf die Patenterteilung: **11.01.2012**
(21) Anmeldenummer: 07703170.6
(22) Anmeldetag: 31.01.2007
(51) Int. Cl.: G01M 5/00, G01B 11/16, G01C 19/72, E04H 9/00

(54) **VERFAHREN ZUR ERMITTLUNG VON BELASTUNGEN /SCHÄDEN EINER MECHANISCHEN STRUKTUR**
METHOD FOR DETERMINING LOADS ON/DAMAGE TO A MECHANICAL STRUCTURE
PROCEDE DE DETECTION DE SOLLICITATIONS SUR ET/OU DE DOMMAGES À UNE STRUCTURE MECANIQUE

(30) Priorität: 02.02.2006 DE 102006005258
(43) Veröffentlichungstag der Anmeldung: 15.10.2008
(73) Patentinhaber: Northrop Grumman LITEF GmbH, 79115 Freiburg (DE)
(72) Erfinder: SCHREIBER, Ulrich, 93468 Miltach (DE); RASCH, Andreas, 79353 Bahlingen (DE); MANDER, John B., College Station, TX 77845 (US); CARR, Athol James, Christchurch 8053 (NZ)
(74) Vertreter: Müller - Hoffmann & Partner
(86) Internationale Anmeldenummer: PCT/EP2007/000833
(87) Internationale Veröffentlichungsnummer: WO 2007/088042

(56) Entgegenhaltungen:
- WO-A-00/43768
- WO-A-03/019113
- US-A1- 2003 019 294
- US-A1- 2004 107 671

## Beschreibung

Die Erfindung betrifft ein Verfahren zur Ermittlung von Belastungen einer mechanischen Struktur und/oder von Schäden oder Zuständen der mechanischen Struktur, die aus den Belastungen der mechanischen Struktur resultieren. Die Erfindung betrifft insbesondere ein Verfahren zur Ermittlung von Gebäudebelastungen und/oder von Gebäudeschäden, die aus Gebäudebelastungen resultieren, sowie eine dafür geeignete Vorrichtung.

Die Überwachung der baumechanischen Integrität von Gebäuden während und nach Gebäudebelastungen (zum Beispiel Erdbeben. Sturm, Gewichtsbelastung durch Schnee auf einem Flachdach) ist eine bedeutende Aufgabe. Neben der Notwendigkeit zur Reduzierung von Personenschäden ist dabei auch der Aspekt der Minimierung von Ausfallzeiten bei der Nutzung der Gebäude zu berücksichtigen. Beständig wachsende Städte mit sehr unterschiedlichen Terraineigenschaften führen außerdem dazu, dass die Auswirkungen von Gebäudebelastungen, beispielsweise von Erdbeben, von Stadtteil zu Stadtteil sehr unterschiedlich ausfallen können. Auch die Art und Struktur einzelner Gebäude innerhalb eines sehr eng begrenzten Bereichs variiert sehr stark. Damit ist es im Extremfall möglich, dass ein Gebäude bei Gebäudebelastungen stark beschädigt wird, während ein direkt benachbartes Bauwerk nahezu intakt bleibt.

Aus Sicht des Katastrophenschutzes ergibt sich damit eine äußerst schwierige Situation, da es zur Optimierung und Koordinierung von Rettungsmaßnahmen keine einfachen Kriterien für die Priorisierung der Hilfsmaßnahme bei einem Katastropheneinsatz in einem größeren Stadtgebiet gibt.

WO 00/43768 beschreibt ein Verfahren, welches den Vorgang eines Kollisions-. Naturkatastrophen oder Vandalismus-Ereignisses auf eine Baustruktur erfasst und auf fotographischem Wege den Zustand der Baustruktur vor und nach dem Ereignis festhalten kann. Hierzu werden vornehmlich akustische Sensoren, Dehnungsmesser, Beschleunigungsmesser und Rotationssensoren in Verbindung mit einem Kamerasystem (infrarot oder Video-) eingesetzt.

WO 03/019113 A1 beschreibt ein System, bei dem ein Laserstrahl von einer externen Position auf die zu untersuchende Struktur gerichtet ist. Dort wird der Strahl an einem Spiegel auf gleichem Weg zurückgeworfen und durch einen Strahlteiler auf einen flächenförmigen Detektor abgebildet. Verschiebungen in der Helligkeitsverteilung lassen Rückschlüsse auf Vibrationen und Verschiebungen des Gebäudes zu.

US 2003/0019294A1 beschreibt eine Vorrichtung und ein Verfahren zur Messung von Durchbiegungen und Rotationen von Türmen und anderen schlanken Bauwerken durch Anwendung zweier oder mehrerer Laserstrahlen. Diese Strahlen werden von einem Teil der Struktur von dem damit fest verbundenen Sender abgestrahlt und an einem anderen Teil der Struktur mit einem ebenfalls fest verankerten Detektor registriert. Durchbiegungen der Struktur und Rotationen um eine zu den Strahlen näherungsweise parallele Achse lassen sich somit als Verschiebung auf einer Abbildung der Laserauftreffpunkte erkennen.

US 2004/0107671A1 beschreibt die Anwendung eines Gyroskops zur Messung von Winkeln und Winkelinkrementen. Vorgestellt wird ein Messgerät zur Bestimmung von Winkeln. Dabei werden die Begrenzungen, die ein verwendetes Gyroskop aufgrund von Sensordrift hat, nicht erwähnt.

EP 0 409 341 A1 beschreibt einen Telekordinometer, mit Hilfe dessen die Bewegungen und Schwingungen einer mit ihm verbundenen Struktur gemessen werden können.

In der Veröffentlichung von Daniele Inaudi, Branko Glisic. "Interferometric Inclinometer For Structural Monitoring" in 2002 15th Optical Fiber Sensor Conference Technical Digest. Ofs 2002 (CAT. NO. 02EX533) IEEE PISCATAWAY, NJ. USA. Bd.1, 2002. Seiten 391 - 394. vol.1, XP002433514, ISBN: 0-7803-7289-1)) werden ferner die Möglichkeiten beschreiben, komplexe Strukturen in ihrer Position. Ausdehnung und Verformung zu überwachen.

Die der Erfindung zugrunde liegende Aufgabe ist, ein Verfahren sowie eine Vorrichtung zur Ermittlung individueller Gebäudebelastungen und/oder Gebäudeschäden anzugeben, sodass eine Priorisierung der Hilfsmaßnahmen bei einem Katastropheneinsatz in einem größeren Stadtgebiet möglich ist.

Zur Lösung dieser Aufgabe stellt die Erfindung Verfahren zur Ermittlung von Gebäudebelastungen und/oder von Gebäudeschäden, die aus Gebäudebelastungen resultieren, gemäß dem Patentanspruch 1 bereit. Ferner stellt die Erfindung Verfahren zur Ermittlung von Belastungen einer mechanischen Struktur und/oder von Schäden oder Zuständen der mechanischen Struktur, die aus den Belastungen der mechanischen Struktur resultieren, gemäß dem Patentanspruch 8 bereit. Vorteilhafte Ausgestaltungen bzw. Weiterbildungen des Erfindungsgedankens finden sich in den Unteransprüchen.

Das erfindungsgemäße Verfahren zur Ermittlung von Gebäudebelastungen und/oder von Gebäudeschäden, die aus Gebäudebelastungen resultieren, zeichnet sich dadurch aus, dass die durch Gebäudebelastungen oder Gebäudeschäden bewirkten Rotationen eines Gebäudeteils über einen faseroptischen Rotationssensor, der mit dem Gebäudeteil mechanisch starr verbunden ist, gemessen werden, und aus den gemessenen Rotationen auf die Gebäudebelastungen/Gebäudeschäden geschlossen wird.

Um die Ermittlung der Gebäudebelastungen/Gebäudeschäden zu präzisieren, kann anstelle eines einzelnen faseroptischen Rotationssensors eine Vielzahl von Rotationssensoren zum Einsatz kommen: So können die durch Gebäudebelastungen/Gebäudeschäden bewirkten Rotationen mehrerer Gebäudeteile über entsprechende faseroptische Rotationssensoren, die mit den Gebäudeteilen mechanisch starr verbunden sind, gemessen werden, und aus den gemessenen Rotationen auf die Gebäudebelastungen/ Gebäudeschäden geschlossen werden. Mit anderen Worten: Jeder Rotationssensor misst die Rotationen desjenigen Gebäudeteils, mit dem dieser verbunden ist. Aus der Summe der ermittelten Rotationen der einzelnen Gebäudeteile kann dann auf den Gesamtzustand des Gebäudes geschlossen werden bzw. die Gebäudebelastungen/Gebäudeschäden für jeden Teil des Gebäudes individuell festgelegt werden. Damit ist es beispielsweise möglich, Torsionen innerhalb eines Gebäudes, z.B. zwischen zwei aufeinanderfolgenden Stockwerken des Gebäudes, festzustellen.

Jeder Rotationssensor kann nach Bedarf individuell als einachsiger, zweiachsiger oder dreiachsiger Rotationssensor ausgelegt sein, d. h. jeder Rotationssensor kann individuell als Sensor, der Rotationen um eine, zwei oder drei Rotationsachsen misst, ausgelegt sein. So können beispielsweise besonders kritische Gebäudeteile mit dreiachsigen Rotationssensoren ausgestattet werden, um eine präzise Messung zu ermöglichen, wohingegen bei unkritischen Gebäudeteilen beispielsweise zweiachsige oder einachsige Rotationssensoren ausreichend sein können.

In einer Ausführungsform der Erfindung sind die Rotationssensoren an Seitenwänden des Gebäudes befestigt, derart, dass aus den gemessenen Rotationen auf die Relativwinkel zwischen den Seitenwänden und den Böden bzw. Decken des Gebäudes, die durch die Seitenwände gestützt werden, geschlossen werden kann. Derartige Relativwinkel sind ein bewährtes Maß zur Beurteilung von Gebäudebelastungen/ Gebäudeschäden, insbesondere von Erdbebenschäden.

Zusätzlich zu den faseroptischen Rotationssensoren können am Gebäude Beschleunigungssensoren oder andere Sensoren vorgesehen werden, die mit entsprechenden Gebäudeteilen mechanisch starr verbunden sind, und über die durch Gebäudebelastungen/Gebäudeschäden bewirkte Translationen der Gebäudeteile gemessen werden, wobei aus den gemessenen Translationen auf Gebäudebelastungen/Gebäudeschäden geschlossen wird. Das zusätzliche Vorsehen derartiger Sensoren ermöglicht eine besonders präzise Ermittlung von Gebäudebelastungen/Gebäudeschäden, da auf diese Weise alle sechs Freiheitsgrade der Bewegung (nämlich drei Translationsfreiheitsgrade und drei Rotationsfreiheitsgrade) gemessen werden können.

In einer Ausführungsform des erfindungsgemäßen Verfahrens wird aus den gemessenen Rotationen und/oder Translationen auf die Orientierungsänderung des Gebäudes gegenüber der Rotationsachse der Erde geschlossen. Die Orientierungsänderung kann als zuverlässiges Maß für die zu ermittelnden Gebäudebelastungen/Gebäudeschäden, insbesondere für Erdbebenschäden, gewertet werden.

Verallgemeinert gesehen stellt die Erfindung ein Verfahren bereit zur Ermittlung von Belastungen einer mechanischen Struktur und/oder von Schäden oder Zuständen der mechanischen Struktur, die aus den Belastungen der mechanischen Struktur resultieren. Das Verfahren ist dadurch gekennzeichnet, dass die durch Belastungen/Schäden der mechanischen Struktur bewirkten Rotationen eines Teils der mechanischen Struktur über einen faseroptischen Rotationssensor, der mit dem Strukturteil mechanisch starr verbunden ist, gemessen werden, und aus den gemessenen Rotationen auf die Belastungen/Schäden/Zustände der mechanischen Struktur geschlossen wird.

Die Erfindung betrifft weiterhin ein Verfahren zur Ermittlung von Belastungen einer mechanischen Struktur und/oder von Schäden oder Zuständen der mechanischen Struktur, die aus den Belastungen der mechanischen Struktur resultieren. Das Verfahren ist dadurch gekennzeichnet, dass die durch Belastungen/Schäden der mechanischen Struktur bewirkten Rotationen mehrerer Teile der mechanischen Struktur über entsprechende faseroptische Rotationssensoren, die mit den Strukturteilen mechanisch starr verbunden sind, gemessen werden, und aus den gemessenen Rotationen auf die Belastungen/Schäden/Zustände der mechanischen Struktur geschlossen wird.

Unter dem Begriff "mechanische Struktur" ist beispielsweise ein Gebäude oder ein Teil eines Gebäudes (Dach), eine Brücke, ein Tunnel, der Rumpf oder die Tragflächen eines Flugzeugs, ein Teil des Erdbodens (z. B. der Fels eines Bergs). eine Leitung oder ein Verkehrsweg (Straße, Zugleise, Zugtrassen) etc., zu verstehen.

Die Erfindung stellt des weiteren eine Vorrichtung zur Ermittlung von Gebäudebelastungen und/oder von Gebäudeschäden, die aus Gebäudebelastungen resultieren, bereit. Die Vorrichtung zeichnet sich aus durch
- einen faseroptischen Rotationssensor, der mit einem Gebäudeteil mechanisch starr verbunden ist, und
- eine mit dem Rotationssensor verbundene Auswerteeinrichtung zur Ermittlung der Gebäudebelästungen/Gebäudeschäden auf Grundlage von Rotationen des Gebäudeteils, die durch den Rotätionssensor detektiert wurden.

Die Erfindung betrifft weiterhin eine Vorrichtung zur Ermittlung von Belastungen einer mechanischen Struktur und/oder von Schäden oder Zuständen der mechanischen Struktur, die aus den Belastungen der mechanischen Struktur resultieren, die aufweist:
- einen faseroptischen Rotationssensor, der mit einem Teil der Struktur mechanisch starr verbunden ist, und
- eine mit dem Rotationssensor verbundene Auswerteeinrichtung zur Ermittlung der Belastungen/Schäden/Zuständen der Struktur auf Grundlage von Rotationen des Strukturteils, die durch den Rotationssensor detektiert wurden.

Für die erfindungsgemäße Vorrichtungen gelten die im Rahmen des erfindungsgemäßen Verfahrens getroffenen Aussagen (Ausführungsformen) analog: So können die erfindungsgemäße Vorrichtungen auch aus mehreren faseroptischen Rotationssensoren bestehen: die Rotationssensoren können als einachsige, zweiachsige oder dreiachsige Rotationssensoren ausgelegt sein; etc..

Die Auswerteeinrichtungen der einzelnen Rotationssensoren können mit weiteren Geräteeinheiten vernetzbar sein, so dass sich ermittelte Rotationsdaten einfach sammeln lassen, um bereits kurz nach Gebäudebelastungen/Gebäudeschäden eine grobe Schadensübersicht erstellen zu können. Hierbei ist es sowohl möglich, jeden Rotationssensor mit einer eigenen Auswerteeinrichtung zu versehen, als auch eine einzige zentrale Auswerteeinrichtung vorzusehen, die mit allen Rotationssensoren und anderweitigen Sensoren in Verbindung steht. Die Vernetzung der Auswerteeinrichtungen mit weiteren Geräteeinheiten bzw. die Vernetzung der Rotationssensoren mit einer zentralen Auswerteeinrichtung kann beispielsweise über Kabelleitungen oder über Funkverbindungen erfolgen.

Erfindungsgemäß kommt demnach ein auf absoluter Rotationsmessung basierender Sensor zum Einsatz, der die Auslenkung des Gebäudes während eines Erdbebens mit einem spezialisierten faseroptischen Gyroskop dynamisch in drei Raumrichtungen erfasst. In Echtzeit wird dabei die Maximalauslenkung und die kumulierte Auslenkung einzelner Stockwerke bzw. des gesamten Gebäudes bestimmt und gegen eine vordefinierte gebäudespezifische Toleranztabelle verglichen, welche vorher im Sensor oder in einer mit dem Sensor verbundenen Auswerteeinrichtung verankert wurde. Das Ergebnis dieser Gebäudebewertung wird zur Unterstützung von Sofortmaßnahmen beispielsweise in einem einfachen mehrstufigen Farbcode angezeigt und gleichzeitig ab einer externen Schnittstelle verfügbar gemacht. Dies erlaubt die Verbindung mehrerer solcher Sensoren zu einer übergeordneten Funktionseinheit, sowie die Einbindung einzelner Sensoren bzw. Sensorenverbunde in einem Funknetz.

Die Erfindung wird im Folgenden unter Bezugnahme auf die Figuren in beispielsweiser Ausführungsform näher erläutert. Es zeigen:
- **Fig. 1**: eine schematische Darstellung eines Gebäudeteils mit daran angebrachten Rotationssensoren vor und nach einem Erdbeben;
- **Fig. 2**: eine schematische Darstellung zweier aneinander grenzender Gebäudeteile vor und nach einem Erdbeben; und
- **Fig. 3**: ein Flussdiagramm einer Ausführungsform des erfindungsgemäßen Verfahrens.
- **Fig. 4**: einen Torsionsverlauf eines Gebäudes während einem Erdbeben.

In den Figuren sind einander entsprechende Bauteile bzw. Bauteilgruppen mit denselben Bezugsziffern gekennzeichnet. In der folgenden Beschreibung wird der Einfachheit halber angenommen, dass es sich bei den Gebäudebelastungen/Gebäudeschäden um Erdbebenschäden handelt.

Wie bereits angedeutet wurde, ist das Kernelement des Konzeptes ein (vorzugsweise) dreikomponentiger inertialer faseroptischer Rotationssensor, der mit der Bausubstanz fest verbunden wird. Auf diese Weise nimmt der Sensor an den Bewegungen des Gebäudes (bzw. Gebäudesektionen) teil und liefert die Drehrate um drei linear unabhängige Raumrichtungen (beispielsweise um die "Längsachse", die "Querachse" des Gebäudes und um dessen Horizontalebene) als Sensorsignal. Im Prozessorteil des Sensors werden diese Drehraten integriert und die kumulierte Maximalauslenkung bezüglich eines intertialen Bezugssystemes berechnet. Der maximale Auslenkungswinkel zwischen einer unterstützenden Wand und der Betondecke eines Gebäudes ist eine der kritischen Größen für die Beurteilung der verbliebenen Tragfähigkeit dieses Bauwerkteiles. Eine zu große Auslenkung einer Deckenplatte gegen seine Unterstützung führt zu einer Überbeanspruchung der Stützkonstruktion und nachfolgend zu einer Rissbildung, welche die Tragfähigkeit beeinträchtigt. Dabei ist es unerheblich, ob diese Auslenkung schlagartig oder über einen größeren Zeitraum verteilt erfolgt. Ausschlaggebend für die Haltbarkeit der Konstruktion ist der maximale Auslenkungswinkel.

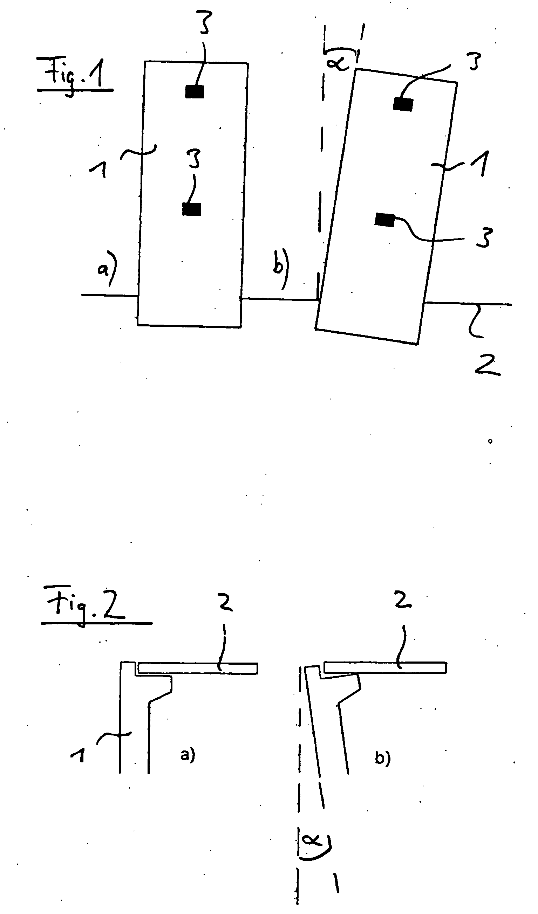

In Fig. 2 ist dieser Zusammenhang graphisch illustriert. Dabei skizziert Fig. 2 a) eine normal an einem Seitenwandteil 1 eingehängte Betondecke 2 ohne Belastungen durch Gebäudeneigungen, während b) die Situation nach einem Erdbeben wiedergibt. Übersteigt der durch das Erdbeben entstandene Neigungswinkel (alpha) einen gewissen Schwellenwert, so kann es zum Einsturz des Gebäudes kommen.

Gegenüber der Verwendung herkömmlicher Beschleunigungsmesser hat das erfindungsgemäße Verfahren den Vorteil, dass es auf dem Prinzip einer absoluten Rotationsmessung basiert und einen sehr breiten Dynamikbereich umfasst. Auf diese Weise werden neben hochfrequenten Auslenkungen auch noch sehr langsam ablaufende Neigungsvariationen in Frequenzbereichen erfasst, die durch Trägheitssensoren nicht mehr zugänglich sind.

Je nach Anordnung mehrerer Sensoren in einem Gebäude erhält man so nicht nur die Neigung eines als starr angenommenen Bauwerkes, sondern auch die differenzielle Neigung bzw. Torsion zwischen einzelnen mit solchen Sensoren ausgerüsteten Stockwerken und Gebäudeteilen.

Beschleunigungsmesser, die auf dem Konzept der Massenträgheit funktionieren, können hier zusätzlich zur Anwendung kommen. Auf diese Weise wird es erstmals möglich sein, einen vollständigen Sensor für alle sechs Freiheitsgrade der Bewegung (nämlich drei Translationsfreiheitsgrade und drei Rotationsfreiheitsgrade) zu erschließen.

Der erfindungsgemäße Gebäudesensor 3 (der neben einem faseroptischen Rotationssensor auch Translationssensoren beinhalten kann) erfasst Drehraten bzw. den integralen Auslenkungswinkel eines Gebäude bzw. Gebäudeteils unter Einwirkung eines Erdbebens. Hierzu ist er an festen Seitenwänden 1, die repräsentativ für das Gebäudeverhalten sind, starr anzubringen, wie in Fig. 1 gezeigt: In Fig. 1 a) ist die Situation vor einem Erdbeben, in Fig. 1b) die Situation nach einem Erdbeben (schematisch) gezeigt für eine Raumrichtung (die angenommene Neigung des Gebäudes befindet sich in der Papierebene; die empfindliche Drehachse des Gebäudesensors 3 steht aus der Papierebene heraus.)

Grundsätzlich kann die Beeinträchtigung des Gebäudes auch in der anderen horizontalen Raumrichtung stattfinden, so wie es auch um eine Drehung um die Vertikalachse kommen kann (Torsionsschwingungen). Eine vollständige Sensortriade deckt alle Bewegungsrichtungen ab. Je nach Struktur des Gebäudes kann es jedoch auch Richtungen geben, die z. B. aufgrund höherer Steifigkeit weniger gefährdet sind, so daß auf einzelne Sensorkomponenten unter Umständen verzichtet werden kann.

Da Rotationssensoren auf der Basis des Sagnac-Effektes Rotationen absolut erfassen, kann die Orientierung eines Gebäudes relativ zur Rotationsachse der Erde automatisch vor, während, oder nach einem Erdbeben in Echtzeit als Messkriterium ausgewertet werden. Dies erlaubt die Bestimmung der Orientierungsänderung eines Gebäudes, ohne auf lokale Referenzen angewiesen zu sein, die sich ja durch Einwirkung eines Erdbebens verändert haben könnten.

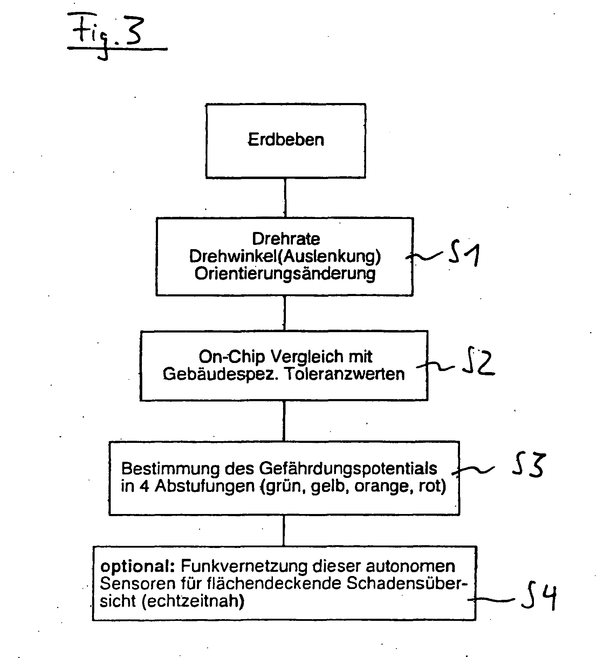

In Fig. 3 ist eine Ausführungsform des erfindungsgemäßen Verfahrens gezeigt: Der Sensor 3 misst in kontinuierlicher Abfolge die Drehrate, den Drehwinkel (das entspricht der Auslenkung des Gebäude oder Gebäudeteils) und bestimmt ferner das Skalarprodukt zwischen dem Erdrotattonsvektor und der Sensornormalen (empfindliche Achse) in einem Schritt S1. Unter Einwirkung eines Erdbebens, oder einer großen Windlast (Sturmböe) ergeben sich in den Beobachtungsgrößen größere Beträge, die von der Steuerungselektronik gegen eine im Programm verankerte Toleranzwerttabelle verglichen werden (Schritt S2). Diese Tabelle ist auf jedes Gebäude spezifisch abgestimmt. Aus dem Vergleich zwischen dem individuellen Gebäudetoleranzen und den momentanen Messwerten bestimmt der Prozessor das Gefährdungspotenzial durch das externe Ereignis (Schritt S3). Im einfachsten Fall wird dies durch einen vierstufigen Farbcode: Grün, Gelb. Orange und Rot signalisiert.

Durch eine dynamische Funkvernetzung etlicher dieser Sensoren z. B. in ganzen Stadteilen, läßt sich dann echtzeitnah eine flächendeckende grobe Schadensübersicht erstellen (Smart-Sensor-Anwendung). Dies könnte z. B. von Katastrophenschutzdiensten zur Erstellung von Prioritätslisten abgefragt und genutzt werden (Schritt S4).

In der folgenden Beschreibung sollen weitere Aspekte der Erfindung erläutert werden:

Faseroptische Kreisel verfügen zwar noch nicht über die Sensorempfindlichkeit großer Ringlaser, eignen sich jedoch aufgrund ihrer kleinen Abmessungen und ihres geringen Stromverbrauchs sowohl für einen Feldeinsatz im Nahbreich eines seismischen Ereignisses (Nachbebenzonen. Vulkane etc.) sowie für die instantane Erfassung von Gebäudezuständen nach Erdbebeneinwirkungen aber auch für das Monitoring statischer Verformungen. Durch die Zusammenführung von Rotationssensorik und Seismometern bzw. Beschleungungsmessern ergibt sich die Möglichkeit, einen vollständigen Sensor für alle sechs Freiheitsgrade der Bewegung zu entwickeln und zu nutzen. Ein wichtiger Aspekte hierbei ist die Berücksichtigung der besonderen Gegebenheiten der Rotationssensoren für die von lokalen Referenzsystemen freie Messung z.B. Möglichkeit zur Absolutorlentlerung des Sensors in Echtzeit, sowie die Selbstkalibration des Sensors anhand des globalen Erdrotationssignals.

Erfindungsgemäß werden neue, mobile, kostengünstige Sensoren bereitgestellt, die - zusammen mit klassischer seismischer Sensorik - es erlauben, Bodenbewegungen korrekt und zwar in allen sechs Freiheitsgraden der Bewegung zu beobachten: zur vollständigen Beschreibung der Bodenbewegungen müssen nicht nur Translationen, sondern auch Rotationen hochauflösend beobachtet werden.

Erfindungsgemäß können langfristig großräumige Aussagen über Veränderung und Deformationen mit erweiterten sechs-Komponentenregistrierungen (neuen Messmethoden, die mobil, kostengünstig, und schnell einsetzbar sind) gemacht werden. Die zusätzliche Beobachtungsgröße "Rotationsbewegungen" kann vor allem auch bei der Inversion von Herdparametern zum Einsatz kommen (dynamische Rotationen) und deren Genauigkeit verbessern. Dabei kann Insbesondere die ansonsten untrennbare Kopplung von Neigung und Translationen der gemessenen Signale auf der Sensorebene untersucht und durch die Bereitstellung entsprechend hochauflösender Rotattonsmessungen korrigiert werden. Da die transversale Beschleunigung und die Rotationsrate bei einem Erdbeben in Phase und proportional zueinander sind, ist bei den Seismogrammen eine Kopplung von erdbebeninduzierten Neigungsanteilen in das Sensorsignal der anderen linear unabhängigen Raumrichtungen im Nahfeld des Erdbebengeschehens nicht zu vermeiden. Nur ein Sensor mit allen sechs unabhängigen Freiheitsgraden der Bewegung - also unter Einbeziehung der Rotation - kann hier eine Verbesserung bringen.

Das erfindungsgemäße Konzept in der Konstruktion von Faserkreiseln kann in kostengünstige Weise die Empfindlichkeit existierender Rotationssensoren auf Glasfaserbasis um bis zu zwei Größenordnungen gegenüber dem bisherigen Stand der Technik steigern und in Ergänzung mit einem Breitbandseismometer erstmalig alle sechs Freiheitsgrade der Bewegung in einer tragbaren feldeinsatzfähigen Realisierung mit ausreichender Empfindlichkeit zur Verfügung stellen.

Die Erfindung konzentriert sich auf die Nutzung und Fortentwicklung moderner Rotationssensoren als neue und innovative Basistechnologie für den Einsatz in Frühwarnsystemen. Die daraus resultierenden vielfältigen neuen technologischen Möglichkeiten sollen insbesondere auf dem Gebiet der Überwachung von Baustrukturen sowie auf dem Gebiet der Seismologie angewandt werden.

Nach einem Erdbeben ist insbesondere in größeren Metropolen eine schnelle Abschätzung der Schäden an wichtigen Gebäuden insbesondere zur Optimierung der Rettungsmaßnahmen von zentraler Bedeutung. Könnten die koseismischen. Bewegungen (Zeitverlauf der Deformationen, statische Verschiebungen und statische Rotationen) gemessen und bezüglich kritischer Größen in einem autarken Sensor echtzeitnah ausgewertet werden, so könnten vor allem für kritische Gebäude und Leitungen bzw. Verkehrswege deformationsinduzierte Veränderungen nahezu instantan bestimmt werden. Erfindungsgemäß wird ein kostengünstiger, intelligenter 6-C Sensor bereitgestellt, der im Sinne einer "black box" in Gebäuden, Brücken. Tunneln oder sonstigen Strukturen eingebaut werden kann, welcher wertvolles Datenmaterial über das Bauwerksverhalten während eines Erdbebens oder eines anderen deformierenden Ereignisses registriert und für die Analyse bereitstellt. Erfindungsgemäß wird daher auch besondere Aufmerksamkeit auf die Nutzung der Eigenschaften der Rotationssensoren als absolute Winkelmesser gelegt. Die erfindungsgemäßen Vorrichtungen zeichnen sich durch eine geringe Stromaufnahme aus und sind fertigungstechnisch für die kostengünstige Massenproduktion geeignet. Die eingebaute Elektronik kann durch instantane Integration und Differentiation der Sensorsignale innerhalb des Sensors somit voraussichtlich eine echtzeitnahe Gefährdungs- bzw. Schadensabschätzung für das jeweilige Bauwerk liefern. Die zusätzliche Fähigkeit zur Kombination solcher konzeptionell autarken Sensoreinheiten zu autonomen lokalen oder regionalen Netzwerken ist dabei möglich.

Ziel aus Sicht der Baumechanik ist es, über eine geeignete Sensorik, die dynamische Anregung infolge Erdbeben und anderen Baugrundbewegungen, wie Erschütterungen sowohl hinsichtlich der Amplituden als auch der relevanten Wellenlängen zu ermitteln. Durch die Kopplung von Geophonen oder Beschleuntgungssensoren mit Rotationssensoren als absolute Winkelmesser können beide Kenngrößen der dynamischen Anregung mit einer geringen Zahl von Messpunkten erfasst werden. Für linienförmige Bauteile können aus gemessenen Rotationen die durch die Einwirkung hervorgerufenen Krümmungen beschrieben werden. Erfindungsgemäß kann - darauf aufbauend - die Bewertung der Anregung über den Vergleich der Messergebnisse mit den der baudynamischen Auslegung der Struktur zugrunde liegenden Annahmen durchgeführt werden. Neben der Erfassung der dynamischen Anregung ist ferner die durch die Einwirkung hervorgerufene bleibende statische Verformung von Interesse. Über die gemessenen Rotationen kann z.B. durch Aneinanderreihung mehrerer Sensoren die bleibende Verformungslinie ermittelt werden. Die Möglichkeit der Messung der (quasi)statischen und der dynamischen Information mit einer kostengünstigen Sensorik stellt gegenüber anderen Messverfahren einen erheblichen Vorteil dar. Die Selbstkalibration des Sensors und seine von der Lage zur Gewichtskraft unabhängige Wirkung eröffnet ein breites Anwendungsgebiet auch hinsichtlich der Frühwarnung vor Folgen antropogener Einwirkungen oder kritischer Einwirkungs/Widerstandskombinationen, wie z.B. hohe Schneelasten an geschwächten Strukturen, Einwirkungen aus extremen Windlasten usf, und könnte so den Einsatz der Sensorik auch für Aufgabenstellungen ermöglichen, die mit anderen Messverfahren nur sehr aufwändig und nicht in Echtzeit erschlossen werden können. Ein wichtiges Gebiet der Frühwarnsysteme, das über die seismische Anregung hinaus geht und durch das erfindungsgemäße Verfahren abgedeckt wird, ist das Monitoring von Baugrundbewegungen wie sie im Tunnelbau, beim Erdaushub, bedingt durch Fundamentlasten oder auch in Bergsenkungsgebieten, auftreten. Damit umfasst das Monitoring mit Hilfe einer Sensorik sowohl die dynamischen Einwirkungen, d.h. die Ursachen für Verformungen oder Schäden gemeinsam mit den bleibenden Deformationen.

### Deformationsbeobachtungen bei Erdbeben und an Vulkanen

Die Probleme bei der Bestimmung der statischen (und dynamischen) Deformation aus Seismometerbeobachtungen sind seit Jahrzehnten bekannt, ohne dass bis heute eine befriedigende stabile Lösung gefunden wurde. Hauptgrund für die Probleme sind die zusätzlichen Effekte in Seismogrammen, die durch Rotationen, und Neigungsänderungen auftreten und dazu führen, dass Geschwindigkeits- oder Beschleunigungsseismogramm nicht intergriert werden können. GPS-Instrumente sind hier nur teilweise eine Verbesserung, da (1) die vertikale Auflösung gering und (2) die Abtastrate für die dynamischen Beobachtungen nicht fein genug ist. Mit kostengünstigen, mobil einsetzbaren 6-C Seismometern wäre eine flächendeckender Beobachtung der dynamischen und statischen Deformationen möglich. Dies könnte langfristig auch Verbesserungen in der Echtzeitbestimmung von Herdparametern erlauben. Ähnliche Argumente gelten für seismische Bebachtungen an Vulkanen, bei denen zum Teil große Deformationen zu erwarten sind. Die unvermeidliche Kopplung von Rotations- und Tiltbewegungen beeinflussen die Standardbreitbandmessungen mit Seismoinetern und erschweren die Modellierung. Die kombinierte Datenanalyse von Rotationen und Translationen ermöglicht in diesem Bereich das verbesserte Abbilden von Herdprozessen und des Zustands der Magmakammern.

In einer Ausführungsform der Erfindung ist bei der Ermittlung der Belastungen/Schäden sowohl die dynamische Boden-Bauwerk-Wechselwirkung als auch die Baudynamik der Gebäudestruktur zu berücksichtigen.

Ziel der Erfindung ist eine Verringerung erdbebeninduzierter Gefährdungen und Risiken. Die Beobachtungen der gesamten Bewegungskomponenten wird von theoretischen Seismologen seit Jahrzehnten angemahnt. Die Jüngsten Entwicklungen in der Sensortechnik scheinen nun die Konstruktion eines geeigneten Mess-Instrumentes mit der nötigen Genauigkeit zu erlauben. Dabei ist zu bemerken, dass die Messtechnik im rein wissenschaftlichen wie im ingenteurtechnischen-Bereich breites Anwendungspotential hat.

Das immer noch anhaltende schnelle Wachstum großer Metropolen in erdbebengefährdeten Regionen (z.B. Istanbul, Tokyo. Los Angeles und New Mexico) führt Im Falle eines darunter ausgelösten starken Erdbebens zu immensen Schäden und dem vielfachen Verlust von Menschenleben. Aufgrund der vollkommen heterogenen Gebäudestrukturen und den variablen Untergrundeigenschaften in diesen Mega-Metropolen ist es für das Jeweilig verantwortliche Katastrophenmanagement in kurzer Zeit nicht möglich, sich gement in kurzer Zeit nicht möglich, sich einen Überblick über die Schadenslage zu verschaffen. Damit ist die schnelle Einleitung einer koordinierten Rettungsaktion stark erschwert und das zu erwartende Ergebnis nicht optimal. Autonome Monitoring- Systeme, die ein Schadensereignis mitprotokollieren und nach vordefinierten Methoden echtzeitnah auswerten und das Ergebnis schnell verfügbar machen, könnten hier zu einer maßgeblichen Verbesserung führen. Durch eine dynamische Gewichtung entsprechend der Funktion eines Gebäudes und der durch den Sensor vorgenommenen automatischen Schadensbeurteilung, sowie anderer festzulegender Kriterien (z.B. Wegstreckenoptimierung von Rettungskräften) ist eine effektive Nutzung der kritischen ersten 6 Stunden nach einem Schadensereignis denkbar.

Das erfindungsgemäße Gebäudesensorkonzept ist in zweifacher Hinsicht innovativ. Zum einen soll damit der Weg zu einem Monitoring-System aufgezeichnet werden, in dem das Gebäudeverhalten während der Einwirkung äußerer Kräfte (Erdbeben, extreme Windlast. Bodensenkungen usw.) detailliert protokolliert wird. Dabei wird über die Eigenschaft der eingesetzten Rotationssensoren als Absolutwinkelmesser eine vollkommene Unabhängigkeit von lokalen Referenzsystemen errreicht. In dieser Hinsicht entspricht der Sensor einer "Black Box", wie sie in Flugzeugen eingesetzt wird. Zusätzlich zu diesen Protokollierungsfunktionen werden Schlüsselparameter (z.B. maximale Auslenkung) während der Messung auf die Überschreitung gebäudespezifischer vordefinierter Grenzwerte untersucht, die nach Möglichkeit eine Klassifizierung des verursachten Schadens (z.B. Grad der Einsturzgefahr) zulassen und diese an eine Zentralstelle (lokale Katastrophenschutzzelle) weitergeben können (Einsatz von Netzstrom unabhängiger Funktechnologie). Damit wäre ein bedeutender Schritt in Richtung Quasi-Echtzeit-Schadensprognose geleistet.

Die für den Feldeinsatz im Bereich starker Bodenbewegung entwickelte Sensorik in der Seismologie hat mehrere Defizite. Neigungen des Seismometers verursachen ebenso ein Sensorsignal wie die eigentlich zu messenden Translationen. In Nahbebenzonen kann der vollständige Bewegungsvektor wegen der fehlenden Rotationsfreiheitsgrade nicht rekonstruiert werden. Damit sind die Messungen sowohl unvollständig, wie auch wegen der Vermischung von Signalquellen fehlerhaft. Dies stellt ein großes Hindernis für die Inversion von Erdbebenparametern dar. Es ist zu erwarten, daß die vollständige Erfassung aller sechs Freiheitsgrade der Bewegung und die klare Trennung von Translation und Rotation (Neigung) bei ausreichender Sensorempfindlichkeit einen deutlichen Beitrag für die Verbesserung der seismologischen Modelle liefern kann (Unabhängigkeit von apparativen Transferfunktionen).

Ringlaser sind hochempfindliche aktive optische Interferometer und bislang die einzigen Instrumente, die Rotationssignale von teleseismischen Ereignisse quantitativ bestimmen können. Selbst für die Anwendung in der Seismologie, wo die Langzeitstabilität nicht im Vordergrund steht, benötigen sie immer noch eine sehr hohe Temperaturkonstanz von besser als 0.1 Grad pro Tag. Thermal bedingte Ausdehnung bzw. Kontraktion des optischen Resonators im Bereich von einigen Hundertstel Mikrometer verursachen eine Drift in der optischen Betriebsfrequenz, welche dann zu plötzlichen Sprüngen im Longitudinalmodenindex führt (Modensprung). Darüber hinaus bleiben Ringlaser trotz aller Vereinfachungen, die im Verlauf des GEOsensor-Projekts erfolgreich realisiert werden konnten, eine komplexe Installation. Dies macht sie für drei spezifische Anwendungsfälle ungeeignet. (1) Eine kurzfristige Umsetzung des Sensors in die Nähe des Epizentrums nach einem starken Erdbeben, um Nachbeben im Nahfeld zu registrieren. (2) Die Erfassung der vollständigen Bewegung (alle 6 Freiheitsgrade) unter dem Einfluß starker Bodenbewegungen. (3) Als Teil einer überwachenden Gebäudesensorik sind sie zu teuer und viel zu sensitiv. Faseroptische Rotationssensoren auf der anderen Seite weisen zwar nicht die Empfindlichkeit der Ringlaser auf, sind jedoch robuste und kompakte Sensoren mit einer deutlich größeren Temperaturtoleranz. Ferner sind sie bedeutend kostengünstiger.

Das erfindungsgemäße Verfahren kann die Selbstkalibrierbarkeit des Systems ausnutzen. Da Rotationssensoren auf der Basis des Sagnac-Effekts Rotationen absolut messen, ist dem Sensorsignal immer auch das Erdrotationssignal überlagert. Dieses Signal kann im Rahmen der hier vorgeschlagenen Anwendung als eine konstante Referenz angesehen werden. Sie steht zu Jedem Zeitpunkt, also vor, während und nach einem Erdbeben als eine von der lokalen Umgebung unabhängigen Referenz zur Verfügung und kann benutzt werden, um die momentane Orientierung des Sensors relativ zur Rotationsachse der Erde zu bestimmen. Ein Vergleich vor bzw. nach einem Erdbeben liefert eine Orientierungsänderung des Sensors durch das seismische Ereignis, bzw. der Bauwerksdeformation. Da der Sensor zur Messung fest an einer Wand montiert ist, entspricht diese Ortentierungsänderung entweder einer Gebäudeneigung, einer Deformation oder einer Verschiebung zwischen einzelnen Stockwerken. Dieses Signal wird durch Integration der gemessenen Drehrate bestimmt und es wird schon nach kurzer Integrationszeit von ca. 1 Minute eine Auflösung von unter einem 1 Grad erreicht. Streng genommen gilt diese Methode der Orientierungsbestimmung des Sensors nur in Nord-/Südrichtung mit hohem Auflösungsvermögen. In Ost-/Westrichtung ist die Auflösung geringer. Daher ist die Untersuchung der optimalen Sensorrealisierung (Bezugssystem des Sensors) ein eigener Arbeitspunkt. Nach der Untersuchung zur Nutzung des Orientierungssignals steht die Nutzung des Rotationssignals der Gebäude im Vordergrund. Hierzu sind (1) Kriterien zwischen gemessener Winkelauslenkung und der Beanspruchung des Gebäudes bzw. verschiedener Werkstoffe zu erstellen. (2) ist der Effekt der Verschiebung einzelner Stockwerke zueinander zu quantifizieren (Interstorey-Rotation) und auf das Sensorsystem zu übertragen.

Das Ausgangssignal eines FOG (Fyber Optical Gyro) ist die Phasendifferenz zwischen zwei eine Fläche gegensinnig umlaufenden Lichtwellen. Sie ist proportional zu der Rotationsgeschwindigkeit des Sensors, sowie zu der von den Lichtstrahlen umschriebenen Fläche. Der Hauptvorteil eines FOG im Vergleich zu einen Ringlaser besteht darin, daß das optische Signal in einer Glasfaser geführt werden kann. Bei einem FOG läßt sich die effektive Fläche erhöhen, ohne daß die Abmessungen des Sensors wesentlich zu verändern sind. Andererseits unterscheiden sich Faserkreisel von Ringlasern dadurch, daß sie eine Phasenmessung ausführen, während Ringlaser auf interferometrischem Wege eine Frequenzdifferenz bestimmen und somit konzeptbedingt ein höheres Auflösungsvermögen erzielen. Dies ist ein großer Nachteil bei der Realisierung eines FOG. Der Rauschkoeffizient (Auflösungsvermögen) eines FOG hängt neben dem Skalenfaktor auch noch von der optischen Leistungsdichte ab. Zum Beispiel erhält man für eine Lichtquelle mit einer Wellenlänge von 1.55 µm, einer Lichtleistung von PO = 100 µW. einer Länge der Glasfaser von 1000 m und einem Durchmesser D der Spule von 0.4 m einen theoretischen Wert für die Empfindlichkeit eines FOG von 4.125 10-8 rad/s.

Einen wesentlichen Bestandteil des optischen Pfades stellt die Spule aus polarisationserhaltender Lichtleitfaser dar. Die Faserlänge und der geometrische Durchmesser der Spule gehen linear in den Skalenfaktor des Kreisels ein. Grundsätzlich erlaubt also die Verlängerung der eingesetzten Spulenfaser das Erreichen immer höherer Genauigkeiten der Drehratenmessung. Gleichzeitig limitieren Jedoch Abschwächungsverluste der Lichtintensität beim Durchlaufen der Faser, sowie auftretende Phasenveränderung durch störende Effekte wie z.B. den Shupe-Effekt oder den Kerr-Effekt, die realisierbare Länge der Faserspule. Deshalb sind für den Prototypen Spulen von ca. 1000 m Länge und einem Durchmesser bis zu 300 mm geplant.

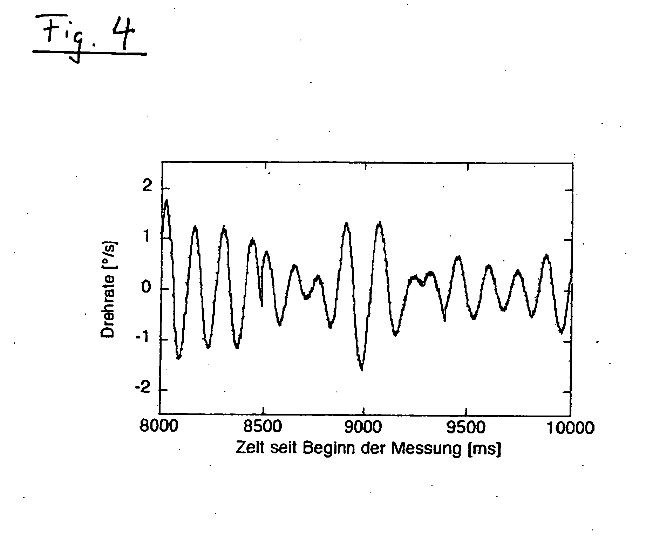

Fig. 4 zeigt einen kurzen Ausschnitt aus einer Messung der Torsion (linke Seite), bei der ein Gebäudemodell (rechte Seite) mit exzentrischer Massenverteilung auf einem Rütteltisch einem künstlichen Erdbeben ausgesetzt worden ist.

In diesem Zusammenhang sei erwähnt, dass erdbebeninduzierte Rotationsbeobachtungen teleseismischer Ereignisse mit kollokierten breitbandigen Translationsmessungen kompatibel sind, und daß in dem Amplitudenverhältnis zusätzliche Information enthalten ist.

## Patentansprüche

1. Verfahren zur Ermittlung von Schäden oder Zuständen einer mechanischen Struktur, die aus einer Belastung der mechanischen Struktur resultieren,
wobei jeweils ein Sensorsignal eines zumindest mit einem Teil der mechanischen Struktur mechanisch starr verbundenen faseroptischen Rotationssensors vor und nach der Belastung ermittelt wird
und die Schäden oder Zustände der mechanischen Struktur auf Basis einer Orientierungsänderung des Rotationssensors ermittelt werden,
**dadurch gekennzeichnet, dass**
aus dem jeweiligen Sensorsignal jeweils ein dem Sensorsignal überlagertes Erdrotationssignal ermittelt wird;
auf der Basis der jeweils ermittelten überlagerten Erdrotationssignale eine jeweilige momentane Orientierung des faseroptischen Rotationssensors gegenüber der Rotationsachse der Erde bestimmt wird und
aus den jeweiligen momentanen Orientierungen des faseroptischen Rotationssensors vor und nach der Belastung die Orientierungsänderung des Rotationssensors bestimmt wird.

2. Verfahren gemäß Anspruch 1,
**dadurch gekennzeichnet, dass**
jeweils ein weiteres Sensorsignal eines zumindest mit einem weiteren Teil der mechanischen Struktur mechanisch starr verbundenen weiteren faseroptischen Rotationssensors vor und nach der Belastung ermittelt wird;
aus dem jeweiligen weiteren Sensorsignal jeweils ein weiteres dem Sensorsignal überlagertes Erdrotationssignal ermittelt wird;
auf der Basis der jeweils weiteren ermittelten überlagerten Erdrotationssignale eine jeweilige weitere momentane Orientierung des weiteren faseroptischen Rotationssensors gegenüber der Rotationsachse der Erde bestimmt wird,
aus den jeweiligen weiteren momentanen Orientierungen des weiteren faseroptischen Rotationssensors vor und nach der Belastung eine weitere Orientierungsänderung des weiteren Rotationssensors bestimmt wird und
die Schäden oder Zustände der mechanischen Struktur auf Basis der Orientierungsänderungen des Rotationssensors und des weiteren Rotationssensors ermittelt werden.

3. Verfahren gemäß einem der Ansprüche 1 oder 2,
**dadurch gekennzeichnet, dass**
die jeweiligen Rotationssensoren Rotationen um eine, zwei oder drei Rotationsachsen messen.

4. Verfahren gemäß einem der Ansprüche 1, 2 oder 3,
**dadurch gekennzeichnet, dass**
die mechanische Struktur als Gebäude ausgebildet ist.

5. Verfahren gemäß Anspruch 4,
**dadurch gekennzeichnet, dass**
die Rotationssensoren an Seitenwänden des Gebäudes befestigt sind, derart, dass aus den gemessenen Rotationen auf die Relativwinkel zwischen den Seitenwänden und den Böden und Decken des Gebäudes, die durch die Seitenwände gestützt werden, geschlossen werden kann.

6. Verfahren gemäß einem der Ansprüche 4 oder 5,
**dadurch gekennzeichnet, dass**
die durch die Gebäudebelastungen/Gebäudeschäden bewirkten Translationen wenigstens eines Gebäudeteils über entsprechende Beschleunigungssensoren, die mit dem wenigstens einen Gebäudeteil mechanisch starr verbunden sind, gemessen werden, und aus den gemessenen Translationen auf die Gebäudebelastungen/Gebäudeschäden geschlossen wird.

7. Verfahren gemäß Anspruch 6,
**dadurch gekennzeichnet, dass**
aus den gemessenen Rotationen und Translationen auf die Orientierungsänderung des Gebäudes gegenüber der Rotationsachse der Erde, die ein Maß für einen zu ermittelnden Erdbebenschaden darstellt, geschlossen wird.

8. Vorrichtung zur Ermittlung von Schäden oder Zuständen einer mechanischen Struktur, die aus einer Belastung der mechanischen Struktur resultiert, mit
einem faseroptischen Rotationssensor, der zumindest mit einem Teil der Struktur mechanisch starr verbunden ist, und
einer mit dem Rotationssensor verbundene Auswerteeinrichtung, die zur Ermittlung jeweils eines Sensorsignals des faseroptischen Rotationssensors vor und nach der Belastung und zur Ermittlung der Schäden oder Zustände der mechanischen Struktur auf Basis der Orientierungsänderung des Rotationssensors ausgebildet ist,
**gekennzeichnet dadurch, dass**
die mit dem Rotationssensor verbundene Auswerteeinrichtung ferner ausgebildet ist
zur Ermittlung jeweils eines dem Sensorsignal überlagerten Erdrotationssignals aus dem jeweiligen Sensorsignal:
zur Bestimmung einer jeweiligen momentanen Orientierung des faseroptischen Rotationssensors gegenüber der Rotationsachse der Erde auf der Basis der jeweils ermittelten überlagerten Erdrotationssignale und
zur Bestimmung einer Orientierungsänderung des Rotationssensors aus den jeweiligen momentanen Orientierungen des faseroptischen Rotationssensors vor und nach der Belastung.

9. Vorrichtung gemäß Anspruch 8,
**gekennzeichnet durch**
einen weiteren faseroptischen Rotationssensor, der mit einem weiteren Teil der mechanischen Struktur mechanisch starr verbunden ist und darüber hinaus mit der Auswerteeinrichtung verbunden ist.

10. Vorrichtung gemäß einem der Ansprüche 8 oder 9,
**gekennzeichnet durch**
je eine mit dem jeweiligen Rotationssensor verbundene Auswerteeinrichtung eines autonomen drahtlosen Datenübertragungssystems zur gemeinsamen Ermittlung der Schäden oder Zustände der Struktur auf Grundlage von Rotationen bzw. Torsionen gegenüber der Rotationsachse der Erde, die **durch** die einzelnen Rotationssensoren detektiert und gemeinsam analysiert werden.

## Claims

1. Method for the determination of damages or states in a mechanical structure resulting from loads in the mechanical structure,
wherein a sensor signal of a fibre-optic rotation sensor which is rigidly connected mechanically to at least a part of the mechanical structure is each determined before and after the load
and the damages or states in the mechanical structure are determined on the basis of a change in orientation of the rotation sensor
**characterized in that**
an earth rotation signal superposed on the sensor signal is each determined from the respective sensor signal;
on the basis of each determined superposed earth rotation signals, a respective instantaneous orientation of the fibre-optic rotation sensor with respect to the axis of rotation of the earth is deduced and
the change in orientation of the rotation sensor is determined from the respective instantaneous orientations of the fibre-optic rotation sensor before and after the load.

2. Method according to claim 1, **characterized in that**
a further sensor signal of a further fibre-optic rotation sensor which is rigidly connected mechanically to at least a further part of the mechanical structure is each determined before and after the load
a further earth rotation signal superposed on the sensor signal is each determined from the respective further sensor signal;
on the basis of each further determined superposed earth rotation signals, a respective further instantaneous orientation of the further fibre-optic rotation sensor with respect to the axis of rotation of the earth is deduced
a further change in orientation of the further rotation sensor is determined from the respective further instantaneous orientations of the further fibre-optic rotation sensor before and after the load and
the damages or states in the mechanical structure are determined on the basis of the changes in orientation of the rotation sensor and the further rotation sensor.

3. Method according to one of Claims 1 or 2, **characterized in that** the respective rotation sensors measure rotations at about one, two or three axes of rotation.

4. Method according to one of Claims 1, 2 or 3, **characterized in that** the mechanical structure is a building.

5. Method according to Claim 4, **characterized in that** the rotation sensors are fastened to side walls of the building, in such a way that the relative angles between the side walls and the floors and ceilings of the building which are supported by the side walls can be deduced from the measured rotations.

6. Method according to one of Claims 4 or 5, **characterized in that** the translations of at least one building part which are caused by building loads/building damages are measured by corresponding acceleration sensors which are rigidly connected mechanically to the at least one building part, and the building loads/building damages are deduced from the measured translations.

7. Method according to Claim 6, **characterized in that** the change in orientation of the building with respect to the axis of rotation of the earth, which constitutes a measure of an earthquake damage to be determined, is deduced from the measured rotations and translations.

8. Device for the determination of damages or states in a mechanical structure resulting from loads in the mechanical structure, comprising
- a fibre-optic rotation sensor which is rigidly connected mechanically to at least a part of the structure, and
- an evaluation apparatus, connected to the rotation sensor, adapted to determine each a sensor signal of the fibre-optic rotation sensor before and after the load and to determine the damages or states of the mechanical structure based on change in orientation of the rotation sensor,
**characterized in that**
the evaluation apparatus, connected to the rotation sensor, is further adapted to
determine each an earth rotation signal superposed on the sensor signal from the respective sensor signal;
deduce a respective instantaneous orientation of the fibre-optic rotation sensor with respect to the axis of rotation of the earth on the basis of each determined superposed earth rotation signals, and
determine a change in orientation of the rotation sensor from the respective instantaneous orientations of the fibre-optic rotation sensor be fore and after the load.

9. Device according to claim 8,
**characterized by**
a further fibre-optic rotation sensor which is rigidly connected mechanically to a further part of the mechanical structure and which is moreover connected to the evaluation apparatus.

10. Device according to one of claims 8 or 9, **characterized by**
individual evaluation apparatuses, connected to each of said rotation sensors, of an autonomous wireless data transmission system for jointly determining the damages or states in the structure on the basis of rotations or torsions with respect to the axis of rotation of the earth which are detected by said individual rotation sensors and jointly analyzed.

## Revendications

1. Procédé pour déterminer des dégradations ou des états d'une structure mécanique qui résultent d'une sollicitation de celle-ci,
étant précisé qu'un signal de capteur d'un capteur de rotation à fibres optiques relié rigidement, mécaniquement, au moins à une partie d'une structure mécanique est détecté avant et après la sollicitation
et les dégradations ou les états de la structure mécanique sont déterminés sur la base d'une modification d'orientation du capteur de rotation,
**caractérisé en ce qu'**un signal de rotation terrestre qui se superpose au signal de capteur est détecté à partir de chaque signal de capteur ;
sur la base de chaque signal de rotation terrestre superposé détecté, une orientation momentanée du capteur de rotation à fibres optiques par rapport à l'axe de rotation de la terre est définie, et
à partir de chaque orientation momentanée du capteur de rotation à fibres optiques avant et après la sollicitation, la modification d'orientation du capteur de rotation est définie.

2. Procédé selon la revendication 1, **caractérisé en ce qu'**à chaque fois, un autre signal de capteur d'un autre capteur de rotation à fibres optiques relié rigidement, mécaniquement, au moins à une partie de la structure mécanique est détecté avant et après la sollicitation ;
un autre signal de rotation terrestre qui se superpose au signal de capteur est détecté à partir de chaque autre signal de capteur ;
une autre orientation momentanée de l'autre capteur de rotation à fibres optiques par rapport à l'axe de rotation de la terre est définie sur la base de chaque autre signal de rotation terrestre superposé déterminé,
à partir de chaque autre orientation momentanée de l'autre capteur de rotation à fibres optiques avant et après la sollicitation, une autre modification d'orientation de l'autre capteur de rotation est définie, et
les dégradations ou les états de la structure mécanique sont déterminés sur la base des modifications d'orientation du capteur de rotation et de l'autre capteur de rotation.

3. Procédé selon l'une des revendications 1 ou 2, **caractérisé en ce que** chaque capteur de rotation mesure les rotations autour d'un, deux ou trois axes de rotation.

4. Procédé selon l'une des revendications 1, 2 ou 3, **caractérisé en ce que** la structure mécanique est conçue comme un bâtiment.

5. Procédé selon la revendication 4, **caractérisé en ce que** les capteurs de rotation sont fixés à des murs latéraux du bâtiment de telle sorte qu'à partir des rotations mesurées, on puisse tirer des conclusions sur les angles relatifs entre les murs latéraux et les planchers et les plafonds du bâtiment qui sont supportés par les murs latéraux.

6. Procédé selon l'une des revendications 4 ou 5, **caractérisé en ce que** les translations d'au moins une partie du bâtiment qui sont provoquées par les sollicitations/dégradations du bâtiment sont mesurées à l'aide de capteurs d'accélération correspondants qui sont reliés rigidement, mécaniquement, à ladite partie de bâtiment, et à partir des translations mesurées, des conclusions sont tirées sur les sollicitations/dégradations du bâtiment.

7. Procédé selon la revendication 6, **caractérisé en ce qu'**à partir des rotations et des translations mesurées, des conclusions sont tirées sur la modification d'orientation du bâtiment par rapport à l'axe de rotation de la terre, qui représente une mesure pour une dégradation à déterminer due à un tremblement de terre.

8. Dispositif pour déterminer des dégradations ou des états d'une structure mécanique qui résultent d'une sollicitation de celle-ci, avec
un capteur de rotation à fibres optiques qui est relié rigidement, mécaniquement, au moins à une partie de la structure, et
un dispositif d'évaluation qui est relié au capteur de rotation et qui est conçu pour déterminer à chaque fois un signal de capteur du capteur de rotation à fibres optiques avant et après la sollicitation, et pour déterminer les dégradations ou les états de la structure mécanique sur la base de la modification d'orientation du capteur de rotation,
**caractérisé en ce que**
le dispositif d'évaluation relié au capteur de rotation est par ailleurs conçu
pour déterminer à partir de chaque signal de capteur un signal de rotation terrestre superposé au signal de capteur ;
pour définir une orientation momentanée du capteur de rotation à fibres optiques par rapport à l'axe de rotation de la terre, sur la base de chaque signal de rotation terrestre superposé déterminé, et
pour définir une modification d'orientation du capteur de rotation à partir de chaque orientation momentanée du capteur de rotation à fibres optiques avant et après la sollicitation.

9. Dispositif selon la revendication 8, **caractérisé par** un autre capteur de rotation à fibres optiques qui est relié rigidement, mécaniquement, à une partie de la structure mécanique et qui est relié par ailleurs au dispositif d'évaluation.

10. Dispositif selon l'une des revendications 8 ou 9, **caractérisé par** un dispositif d'évaluation, relié à chaque capteur de rotation, d'un système de transmission de données autonome sans fil, pour déterminer conjointement les détériorations ou les états de la structure sur la base de rotations ou de torsions par rapport à l'axe de rotation de la terre qui sont détectées par les capteurs de rotation individuels et qui sont analysées conjointement.
